# FASCICULE DE BREVET EUROPEEN

(11) **EP 1 440 271 B1**
(45) Date de publication et mention de la délivrance du brevet: **11.11.2009**
(21) Numéro de dépôt: 02795327.2
(22) Date de dépôt: 17.10.2002
(51) Int. Cl.: F16L 37/092, F16L 37/084

(54) **COUPLEUR**
KOPPLUNGSVORRICHTUNG
COUPLER

(30) Priorité: 30.10.2001 FR 0114024
(43) Date de publication de la demande: 28.07.2004
(73) Titulaire: LEGRIS SA, 35000 Rennes (FR)
(72) Inventeur: LE QUERE, Philippe, F-35830 Betton (FR)
(74) Mandataire: Lavialle, Bruno François Stéphane
(86) Numéro de dépôt international: PCT/FR2002/003559
(87) Numéro de publication internationale: WO 2003/038329

(56) Documents cités:
- EP-A- 0 723 103
- FR-A- 2 640 723
- US-A- 4 951 391

## Description

La présente invention concerne un coupleur destiné au raccordement de deux éléments de transport de fluide tels qu'une conduite et un élément récepteur de fluide comme un réservoir ou un élément émetteur de fluide comme une pompe.

On connaît des coupleurs dits à connexion instantanée ou rapide qui comporte un corps tubulaire agencé pour recevoir une extrémité de conduite et pourvu intérieurement de moyens de retenue de cette extrémité de conduite. Ces moyens sont généralement constitués par une rondelle déformable dont la circonférence intérieure est divisée en une pluralité de dents ou griffes qui s'étendent en saillie à l'intérieur du corps tubulaire. Lorsque l'extrémité de conduite est introduite dans le corps tubulaire, l'extrémité de conduite soulève les dents dont l'extrémité libre vient reposer sur la surface externe de l'extrémité de conduite. Lors de la mise sous pression du circuit dans lequel est implanté le coupleur, l'extrémité de conduite recule légèrement avant que les dents viennent mordre dans la surface externe de l'extrémité de conduite et assurent la retenue de cette dernière. Lors de l'introduction de l'extrémité de conduite, les dents, qui frottent sur la surface externe de l'extrémité de conduite, risquent de rayer celle-ci. Or, l'étanchéité du raccordement est généralement réalisée par un joint torique qui vient enserrer l'extrémité de conduite, de sorte que les rayures risquent de constituer des zones de fuite ou de détériorer le joint d'étanchéité au point que celui-ci ne puisse plus assurer sa fonction. Il serait possible d'augmenter la souplesse de la rondelle pour limiter l'effort exercé sur la surface externe de l'extrémité de conduite par les dents. Toutefois, ceci diminue la fermeté de la retenue et augmente le recul de l'extrémité de conduite lors de la mise sous pression du circuit. Or, ce recul fait naître une zone de rétention de fluide qui doit être maintenue la plus faible possible notamment dans les circuits de transport de liquide périssable.

On connaît également des coupleurs à connexion instantanée qui comprennent un corps tubulaire sur lequel est monté un verrou mobile radialement entre une position de verrouillage dans laquelle le verrou possède une partie en saillie dans le corps tubulaire et une position de déverrouillage dans laquelle cette partie est escamotée du corps tubulaire. Le risque de rayure et le recul de l'extrémité de conduite sont limités. Toutefois, il est nécessaire de prévoir soit directement sur l'extrémité de conduite soit sur un embout monté sur l'extrémité de conduite, un redan afin de coopérer avec le verrou du coupleur.

On connaît par ailleurs du document FR-A- 2 640 723 un coupleur conforme au préambule de la revendication 1.

Un but de l'invention est de proposer un coupleur associant de manière simple les avantages des coupleurs connus mentionnés ci-dessus.

En vue de la réalisation de ce but, on prévoit, selon l'invention, un coupleur comprenant un corps tubulaire agencé pour recevoir un élément tubulaire de transport de fluide comportant une extrémité de conduite, le coupleur comprenant une douille pourvue intérieurement de moyens de retenue de l'extrémité de conduite qui sont sélectivement activables et désactivables, la douille étant montée dans le corps tubulaire pour être mobile axialement entre une position d'activation des moyens de retenue et une position de désactivation des moyens de retenue, caractérisé en ce que le corps est pourvu de moyens d'encliquetage de l'élément tubulaire et la douille est pourvue de moyens d'encliquetage réciproques de ceux du corps pour coopérer avec ces derniers dans la position d'activation, en ce que la douille est pourvue intérieurement de moyens de butée à l'enfoncement de l'extrémité de conduite dans la douille et en ce que la position d'activation de la douille est en aval de la position de désactivation par référence à un sens d'introduction de l'extrémité de conduite dans le coupleur.

Ainsi, la douille sert d'interface entre les moyens d'encliquetage du corps tubulaire et l'extrémité de conduite, et assure la retenue de l'extrémité de conduite lorsqu'elle est en position d'activation alors que l'introduction ou le dégagement de l'extrémité de conduite est laissé libre lorsque la douille est dans sa position de désactivation. En outre, lorsque l'extrémité de conduite est introduite dans le corps tubulaire, elle entraîne la douille de sa position de désactivation vers sa position d'activation. Le coupleur assure de la sorte une connexion instantanée.

Avantageusement alors, la douille possède une extrémité aval pourvue d'un joint annulaire déformable élastiquement comportant un épaulement annulaire interne formant la butée à l'enfoncement de l'extrémité de conduite.

Le joint annulaire d'étanchéité assure alors, outre sa fonction classique d'étanchéité, une fonction de butée à l'enfoncement de l'extrémité de conduite dans la douille et une fonction de compensation du recul de l'extrémité de conduite lors de la mise sous pression du circuit dans lequel est implanté le coupleur. Ceci permet de limiter la formation de zones de rétention de fluide.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue éclatée en coupe longitudinale d'un coupleur de type cartouche conforme à l'invention,
- la figure 2 est une vue en élévation du corps tubulaire de ce coupleur,
- les figures 3 à 6 sont des vues en coupe longitudinale de ce coupleur de type cartouche implanté dans un organe d'un circuit de transport de fluide, et montrent différentes phases d'introduction d'une extrémité de conduite,
- la figure 7 est une vue analogue à la figure 6 de ce coupleur selon une variante de réalisation,
- la figure 8 est une vue analogue à la figure 3 d'un coupleur de type union conforme à l'invention.

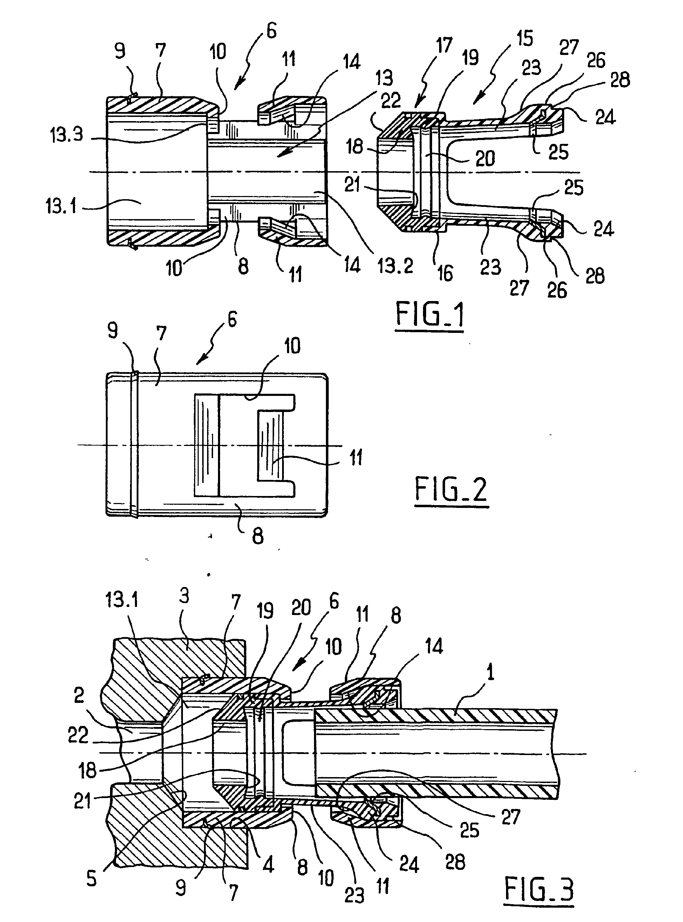

En référence aux figures 1 à 7, le coupleur conforme à l'invention est destiné au raccordement d'une extrémité de conduite 1 au canal interne 2 d'un organe 3 qui débouche à l'extérieur de l'organe 3 par un chambrage 4 qui a un diamètre supérieur à celui du canal interne 2 et qui est raccordé à celui-ci par une surface tronconique 5.

Le coupleur comporte un corps tubulaire généralement désigné en 6 réalisé en matériau thermoplastique. Le corps tubulaire 6 possède une portion d'extrémité 7 destinée à être introduite dans le chambrage 4 de l'organe 3 et, à l'opposé, une portion d'extrémité 8 destinée à s'étendre en saillie de l'organe 3.

La portion d'extrémité 7 est pourvue de moyens de son ancrage dans le chambrage 4. Ces moyens sont ici réalisés sous la forme d'une rondelle de cramponnage 9 métallique partiellement noyée dans le corps tubulaire de telle manière que la rondelle de cramponnage 9 ait son pourtour externe qui s'étend radialement en saillie vers l'extérieur de la portion d'extrémité 7.

La portion d'extrémité 8 comporte deux lumières 10 diamétralement opposées l'une à l'autre. Dans chaque lumière 10, une patte 11 s'étend à partir d'une portion du bord de la lumière 10 opposée à la portion d'extrémité 7 pour avoir son extrémité libre en saillie dans la section correspondante du canal interne généralement désigné en 13 du corps tubulaire 6. Les pattes 11 présentent une surface interne 14 inclinée par rapport à l'axe central du corps tubulaire 1 pour former des rampes ainsi que cela sera expliqué dans la suite de la description.

Le canal interne 13 du corps tubulaire 6 est divisé axialement en deux sections 13.1, 13.2. La section 13.1 est située du côté de la portion d'extrémité 7 et possède un diamètre supérieur à celui de la section 13.2 qui s'étend elle du côté de la portion d'extrémité 8 et se raccorde à la section 13.1 par un épaulement 13.3.

Le canal interne 13 reçoit une douille généralement désignée en 15.

La douille 15 comprend une partie annulaire 16 reçue à coulissement dans la section 13.1 du canal interne 13 et possède deux extrémités opposées.

L'une de ces extrémités est pourvue d'un élément de butée en matériau souple, ici un joint d'étanchéité portant la référence générale 17, réalisé en un matériau élastiquement déformable comme un élastomère. Ce joint d'étanchéité 17 comporte une bague 18 ayant un diamètre externe légèrement supérieur au diamètre de la section 13.1 et un diamètre interne sensiblement égal au diamètre interne de l'extrémité de conduite 1, et une collerette 19 ayant un diamètre interne sensiblement égal au diamètre externe de l'extrémité de conduite 1 et un diamètre externe sensiblement égal au diamètre interne de l'extrémité précitée de la partie annulaire 16, la collerette 19 étant reçue dans cette extrémité. La collerette 19 présente en outre un bourrelet interne 20 de forme annulaire et de diamètre inférieur au diamètre externe de l'extrémité de conduite 1. La surface interne de la collerette 19 se raccorde à la surface interne de la bague 18 par un épaulement 21 formé par une surface tronconique convexe. La bague 18 possède une face terminale 22 opposée à la collerette 19 de forme tronconique convexe correspondant sensiblement à celle de la surface 5 de l'organe 3.

A partir de l'extrémité de la partie annulaire 16 opposée au joint d'étanchéité 17 s'étendent axialement deux bras 23 ayant en coupe transversale une forme en arc de cercle. Les bras 23 ont une extrémité libre 24 qui est pourvue intérieurement de moyens de retenue de l'extrémité de conduite 1. Ces moyens de retenue sont ici formés par un crampon 25 métallique partiellement noyé dans l'extrémité libre 24 pour s'étendre en saillie radiale vers l'intérieur. Les bras 23 sont élastiquement déformables entre un état de repos dans lequel les crampons 25 définissent un passage ayant un diamètre légèrement supérieur au diamètre externe de l'extrémité de conduite 1 et un état déformé dans lequel les crampons 25 définissent un passage de diamètre légèrement inférieur au diamètre externe de l'extrémité de conduite 1. Les extrémités libres 24 ont une surface externe 26 qui présente une rampe 27 pour coopérer avec la surface interne 14 des pattes élastiques 11 et un décrochement 28 pour venir en butée de l'extrémité libre des pattes élastiques 11.

La douille 15 est réalisée par injection bi-matière.

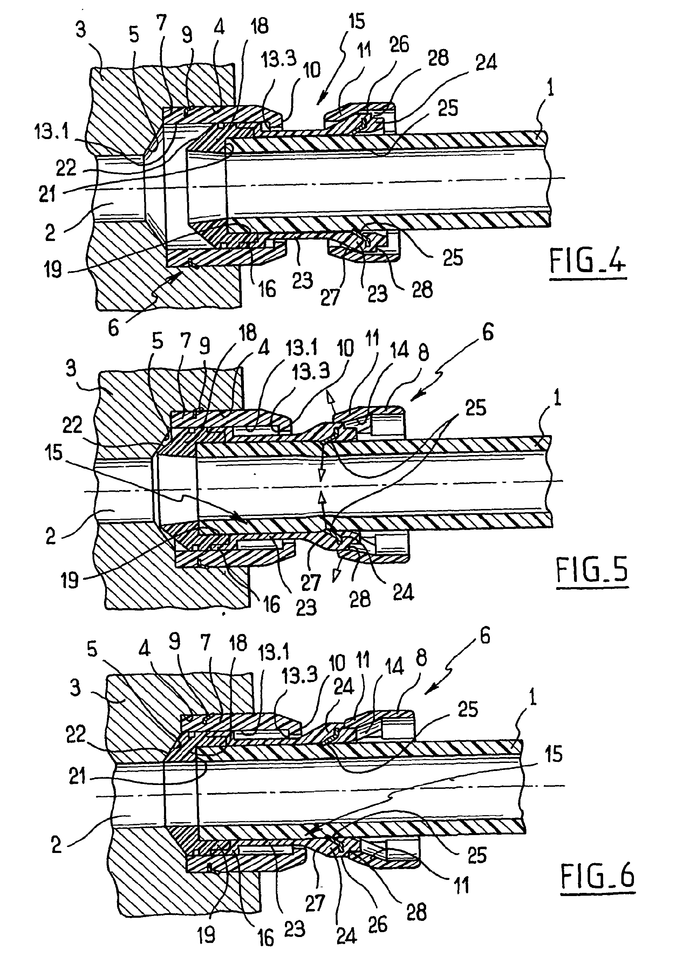

La douille 15 est mobile entre une position de désactivation des moyens de retenue (voir la figure 3) et une position d'activation des moyens de retenue (voir la figure 6), qui seront détaillées ci-après.

Le coupleur est correctement implanté dans l'organe 3 lorsque la portion d'extrémité 7 est ancrée dans le chambrage 4 (figure 3) .

Dans un état de déconnexion, la douille 15 est dans sa position de désactivation (figure 3).

Lorsque l'extrémité de conduite 1 est introduite dans la douille 15, elle vient en butée de l'épaulement 21 et entraîne la douille 15 vers le passage interne 2. Les rampes 27 des extrémités libres 24 rencontrent alors les surfaces inclinées 14 des pattes 11 qui provoquent la déformation des bras 23 de leur état de repos vers leur état déformé (figures 4 et 5).

Lorsque le décrochement 28 passe l'extrémité libre des pattes 11, les bras 23 s'écartent légèrement de sorte que le décrochement 28 se trouve en regard de l'extrémité libre des pattes 11. La douille 15 est alors dans sa position d'activation et les pattes 11 constituent des butées à l'extraction de la douille 15 hors de sa position d'activation. En outre, les pattes 11 maintiennent les bras 23 dans un état déformé dans lequel les crampons 26 mordent la surface externe de l'extrémité de conduite (figure 6). A ce stade, la bague 18 est comprimée entre la surface tronconique 5 de l'organe 3 et la face terminale de l'extrémité de conduite 1 et exerce un effort de réaction sur la douille 15 maintenant les décrochements 28 en appui contre les extrémités libres des pattes 11.

La connexion correcte est signalée par un signal sonore provoqué par la brusque mise en contact des décrochements 28 avec les extrémités libres des pattes 11. L'apparition des extrémités 24 dans les lumières 10 signalent en outre à l'opérateur que la connexion est affectée.

Lorsque le circuit dans lequel est implanté le coupleur est mis sous pression, le fluide exerce sur le joint d'étanchéité 17 une pression radiale sur la surface interne de la bague 18. Cette pression est convertie en efforts axiaux sur l'extrémité de conduite 1 et la douille 15 qui améliorent les contacts et donc l'étanchéité et sollicite peu la retenue de l'extrémité de conduite compte tenu de l'étroitesse de la zone sur laquelle s'exerce la pression.

La déconnexion est réalisée en exerçant une pression sur les extrémités libres 24 des bras 23 au travers des lumières 10 pour permettre aux décrochements 28 d'échapper aux extrémités libres des pattes 11 tout en exerçant un effort de traction sur l'extrémité de conduite 1. On note que la résistance à l'écrasement de l'extrémité de conduite 1 et l'élasticité des bras 23 s'opposent à la pression qu'exerce sur les extrémités 24 l'opérateur réalisant la déconnexion, ce qui limite encore le risque d'une déconnexion accidentelle. En outre, le fait de devoir agir simultanément sur les deux bras 23 limite encore le risque d'une déconnexion accidentelle.

Les décrochements 28 échappent alors aux extrémités libres des pattes 11 et l'extrémité de conduite 1 ainsi que la douille 15 peuvent être amenées vers l'arrière jusqu'à ce que la partie annulaire 16 de la douille 15 arrive en butée de l'épaulement 13.3 séparant les sections 13.1 et 13.2, épaulement 13.3 qui définit la position de désactivation de la douille.

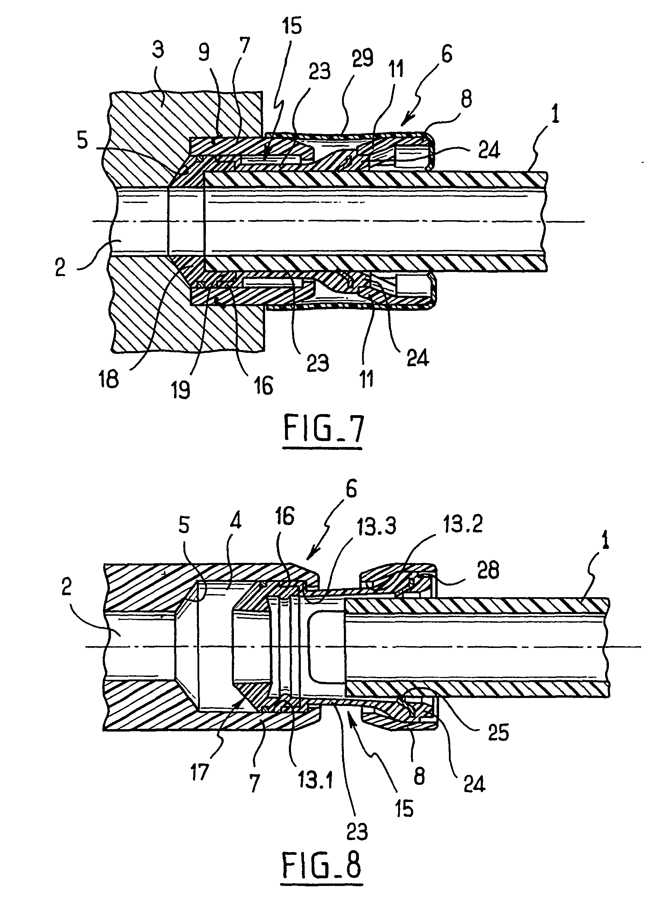

En variante, comme représenté à la figure 7, il est possible de recouvrir la portion d'extrémité 8 d'une capsule souple 29 permettant d'isoler le coupleur de l'environnement extérieur. De préférence, cette capsule 29 sera réalisée en un matériau élastiquement déformable pour permettre de procéder aux manoeuvres de déconnexion sans devoir retirer ladite capsule 29.

L'invention est également applicable aux coupleurs de type union utilisés pour le raccordement l'une à l'autre de deux extrémités de conduite.

Il est représenté à la figure 8 une moitié du coupleur, l'autre moitié étant identique à celle-ci.

Le passage interne 2, la surface tronconique 5 et le chambrage 4 sont alors réalisés directement dans la portion d'extrémité 7 du corps tubulaire 6, le chambrage 4 prolongeant la section 13.1 du canal interne 13 du corps tubulaire 6. La douille 15 est identique à celle du mode de réalisation précédent.

Bien entendu, l'invention n'est pas limitée au mode de réalisation décrit et on peut y apporter des variantes de réalisation sans sortir du cadre de l'invention tel que défini par les revendications.

En particulier, au lieu du joint d'étanchéité, les moyens de butée peuvent comprendre un épaulement interne solidaire de la douille en aval des moyens de retenue par référence au sens d'introduction de l'extrémité de conduite et de préférence l'épaulement interne est réalisé en un matériau souple.

En outre, d'autres moyens d'encliquetage peuvent être utilisés, comme un verrou monté sur le corps pour être mobile radialement entre une position de verrouillage dans laquelle le verrou comporte une portion engagée dans une gorge de la douille et une position de déverrouillage dans laquelle cette portion est dégagée de la gorge.

## Revendications

1. Coupleur comprenant un corps tubulaire (6) agencé pour recevoir un élément tubulaire de transport de fluide comportant une extrémité de conduite, le coupleur comprenant une douille (15) pourvue intérieurement de moyens (23, 25) de retenue de l'extrémité de conduite qui sont sélectivement activables et désactivables, la douille étant montée dans le corps tubulaire pour être mobile axialement entre une position d'activation des moyens de retenue et une position de désactivation des moyens de retenue, **caractérisé en ce que** le corps est pourvu de moyens d'encliquetage (11) de l'élément tubulaire et la douille est pourvue de moyens d'encliquetage réciproques de ceux du corps pour coopérer avec ces derniers dans la position d'activation, **en ce que** la douille (15) est pourvue intérieurement de moyens (21) de butée à l'enfoncement de l'extrémité de conduite dans la douille et **en ce que** la position d'activation de la douille est en aval de la position de désactivation par référence à un sens d'introduction de l'extrémité de conduite dans le coupleur.

2. Coupleur selon la revendication 1, dans lequel les moyens de butée comprennent un épaulement interne (21) solidaire de la douille (15) en aval des moyens de retenue (23, 25) par référence au sens d'introduction de l'extrémité de conduite.

3. Coupleur selon la revendication 2, dans lequel l'épaulement interne (21) est réalisé en un matériau souple.

4. Coupleur selon la revendication 3, dans lequel la douille possède une extrémité aval pourvue d'un joint annulaire (17) déformable élastiquement comportant un épaulement annulaire interne (21) formant la butée à l'enfoncement de l'extrémité de conduite.

5. Coupleur selon la revendication 4, **caractérisé en ce que** le joint annulaire (17) possède une face terminale (22) opposée à l'épaulement (21) agencée pour coopérer avec une surface correspondante (5) solidaire du corps (6).

6. Coupleur selon la revendication 5, dans lequel la face terminale (22) est de forme tronconique convexe.

7. Coupleur selon l'une quelconque des revendications 2 à 6, dans lequel l'épaulement interne (21) a une forme tronconique convexe.

8. Coupleur selon l'une quelconque des revendications 1 à 7, dans lequel les moyens de retenue comprennent au moins un bras (23) s'étendant axialement et ayant une extrémité solidaire de la douille (15) et une extrémité libre (24) pourvue intérieurement d'une dent (25) de cramponnage de l'extrémité de conduite, le bras étant élastiquement déformable entre un premier état dans lequel la dent de cramponnage est escamotée de la douille et un deuxième état dans lequel la dent de cramponnage est en saillie dans la douille.

9. Coupleur selon la revendication 8, dans lequel l'extrémité libre (24) du bras (23) est agencée pour coopérer avec un bord d'une ouverture (10) du corps tubulaire pour maintenir la douille (15) dans sa position d'activation et maintenir le bras (23) dans son deuxième état.

## Claims

1. A coupler comprising a tubular body (6) which is arranged to receive a tubular element for transporting fluid and including a pipe end, the coupler it comprising a bushing (15) provided on the inside with means (23, 25) for retaining the pipe end, which means are selectively activatable and deactivatable, the bushing being mounted in the tubular body to be movable axially between a position for activating the retaining means and a position for deactivating the retaining means, being **characterized in that** the body is provided with means (11) for snap-fastening the tubular element, **in that** the bushing is provided with snap-fastening means complementary to those of the body for co-operating therewith in the activation position, **in that** the bushing (15) is provided internally with abutment means (21) against insertion of the pipe end into the bushing, and **in that** the activation position of the bushing is downstream from the deactivation position relative to the direction in which the pipe end is inserted into the coupler.

2. A coupler according to claim 1, in which the abutment means comprise an internal shoulder (21) secured to the bushing (15) downstream from the retaining means (23, 25) relative to the pipe end insertion direction.

3. A coupler according to claim 2, in which the internal shoulder (21) is made of a flexible material.

4. A coupler according to claim 3, in which the bushing possesses a downstream end provided with an elastically-deformable annular gasket (17) having an internal annular shoulder (21) forming the abutment against insertion of the pipe end.

5. A coupler according to claim 4, **characterized in that** the annular gasket (17) possesses an end face (22) remote from the shoulder (21) and arranged to co-operate with a corresponding surface (5) of the body (6).

6. A coupler according to claim 5, in which the end face (22) is of convex tapering shape.

7. A coupler according to any one of claims 2 to 6, in which the internal shoulder (21) is of convex tapering shape.

8. A coupler according to any one of claims 1 to 7, in which the retaining means comprise at least one arm (23) extending axially and having an end secured to the bushing (15) and a free end (24) provided internally with a tooth (25) for spiking into the pipe end, the arm being elastically deformable between a first state in which the spiking tooth is retracted from the bushing and a second state in which the spiking tooth projects into the bushing.

9. A coupler according to claim 8, in which the free end (24) of the arm (23) is arranged to co-operate with an edge of an opening (10) of the tubular body to hold the bushing (15) in its activation position and to hold the arm (23) in its second state.

## Patentansprüche

1. Kopplungsvorrichtung, umfassend ein rohrförmiges Gehäuse (6), das derart ausgebildet ist, dass es ein rohrförmiges Fluidtransportelement aufnimmt, das ein Leitungsende aufweist, wobei die Kopplungsvorrichtung eine Hülse (15) umfasst, die innen mit Rückhaltemitteln (23, 25) zum Halten des Leitungsendes versehen ist, die selektiv aktivierbar und deaktivierbar sind, wobei die Hülse so in dem rohrförmigen Gehäuse gelagert ist, dass sie axial zwischen einer Aktivierungsposition der Rückhaltemittel und einer Deaktivierungsposition der Rückhaltemittel beweglich ist, **dadurch gekennzeichnet, dass** das Gehäuse mit Rastmitteln (11) zum Verrasten des rohrförmigen Elements versehen ist und die Hülse mit Rastmitteln versehen ist, die zu denen des Gehäuses umgekehrt sind, um mit den letztgenannten in der Aktivierungsposition zusammenzuwirken, dass die Hülse (15) innen mit Anschlagmitteln (21) für einen Anschlag entgegen dem Eindrücken des Leitungsendes in die Hülse versehen ist, und dass sich die Aktivierungsposition der Hülse in Bezug auf eine Einführrichtung des Leitungsendes in die Kopplungsvorrichtung stromabwärts der Deaktivierungsposition befindet.

2. Kopplungsvorrichtung nach Anspruch 1, wobei die Anschlagmittel eine innere Schulter (21) umfassen, die in Bezug auf die Einführrichtung des Leitungsendes stromabwärts der Rückhaltemittel (23, 25) fest mit der Hülse (15) verbunden ist.

3. Kopplungsvorrichtung nach Anspruch 2, wobei die innere Schulter (21) aus einem nachgiebigen Material hergestellt ist.

4. Kopplungsvorrichtung nach Anspruch 3, wobei die Hülse ein stromabwärtiges Ende besitzt, das mit einem elastisch verformbaren Dichtungsring (17) versehen ist, der eine innere ringförmige Schulter (21) hat, die den Anschlag entgegen dem Eindrücken des Leitungsendes bildet.

5. Kopplungsvorrichtung nach Anspruch 4, **dadurch gekennzeichnet, dass** der Dichtungsring (17) eine der Schulter (21) entgegengesetzte Endfläche (22) aufweist, die derart ausgebildet ist, dass sie mit einer entsprechenden, fest mit dem Gehäuse (6) verbundenen Fläche (5) zusammenwirkt.

6. Kopplungsvorrichtung nach Anspruch 5, wobei die Endfläche (22) eine konvexe, kegelstumpfförmige Form hat.

7. Kopplungsvorrichtung nach einem der Ansprüche 2 bis 6, wobei die innere Schulter (21) eine konvexe, kegelstumpfförmige Form hat.

8. Kopplungsvorrichtung nach einem der Ansprüche 1 bis 7, wobei die Rückhaltemittel mindestens einen Arm (23) umfassen, der sich axial erstreckt und ein fest mit der Hülse (15) verbundenes Ende sowie ein freies Ende (24) hat, das innen mit einem Greifzahn (25) zum Verkrallen des Leitungsendes versehen ist, wobei der Arm zwischen einem ersten Zustand, in dem der Greifzahn aus dem Hülsen-Hohlraum ausgerückt ist, und einem zweiten Zustand, in dem der Greifzahn in den Hülsen-Hohlraum vorsteht, elastisch verformbar ist.

9. Kopplungsvorrichtung nach Anspruch 8, wobei das freie Ende (24) des Arms (23) derart ausgebildet ist, dass es mit einem Rand einer Öffnung (10) des rohrförmigen Gehäuses zusammenwirkt, um die Hülse (15) in ihrer Aktivierungsposition und den Arm (23) in seinem zweiten Zustand zu halten.
